# EUROPÄISCHE PATENTANMELDUNG

(11) **EP 2 940 297 A1**
(43) Veröffentlichungstag der Anmeldung: **04.11.2015**
(21) Anmeldenummer: 14166382.3
(22) Anmeldetag: 29.04.2014
(51) Int. Cl.: F03D 9/00

(54) **Übertragen von mittels einer Windenergieanlage erzeugter elektrischer Energie in ein Übertragungsnetz**

(71) Anmelder: Siemens Aktiengesellschaft, 80333 München (DE)
(72) Erfinder: Deicke, Matthias, 31311 Uetze / Schwüblingsen (DE)

(57) **Zusammenfassung**

Die Erfindung betrifft eine Energieübertragungsvorrichtung (50) zum Übertragen von mittels eines elektrischen Generators (56) erzeugter elektrischer Energie zu einer elektrischen Energiesenke (26), mit einer an den elektrischen Generator (56) angeschlossenen Gleichrichteinrichtung (80), einer an die elektrische Energiesenke (26) angeschlossenen Wechselrichtereinrichtung (72) sowie einer mit einem ersten Ende (82) an die Gleichrichteinrichtung (80) und mit einem zweiten Ende (84) an die Wechselrichtereinrichtung (72) angeschlossenen Kabeleinheit (58) zum elektrischen Koppeln der Gleichrichteinrichtung (80) mit der Wechselrichtereinrichtung (72), welche Kabeleinheit (58) zwei elektrische Leitungen (64, 66) aufweist. Erfindungsgemäß sind die Gleichrichteinrichtung (80) und/oder die Wechselrichtereinrichtung (72) ausgebildet, die Kabeleinheit (58) mit einer zu einem vorgegebenen elektrischen Bezugspotential (86) symmetrierten elektrischen Spannung (88) zu beaufschlagen.

## Beschreibung

Die vorliegende Erfindung betrifft eine Energieübertragungsvorrichtung zum Übertragen von mittels eines elektrischen Generators erzeugter elektrischer Energie zu einer elektrischen Energiesenke, mit einer an den elektrischen Generator angeschlossenen Gleichrichteinrichtung, einer an die elektrische Energiesenke angeschlossenen Wechselrichtereinrichtung sowie einer mit einem ersten Ende an die Gleichrichteinrichtung und mit einem zweiten Ende an die Wechselrichtereinrichtung angeschlossenen Kabeleinheit zum elektrischen Koppeln der Gleichrichteinrichtung mit der Wechselrichtereinrichtung, welche Kabeleinheit zwei elektrische Leitungen aufweist. Darüber hinaus betrifft die Erfindung eine Windkraftanlage mit einer an einem Turm horizontal drehbar gelagerten Gondel und mit einem an der Gondel drehbar gelagerten Windrad und einem in der Gondel angeordneten, mit dem Windrad mechanisch gekoppelten elektrischen Generator nach Art einer rotierenden elektrischen Maschine. Schließlich betrifft die Erfindung ein Verfahren zum Übertragen von mittels eines elektrischen Generators erzeugter elektrischer Energie zu einer elektrischen Energiesenke, wobei die vom elektrischen Generator erzeugte elektrische Energie mittels einer Gleichrichteinrichtung gleichgerichtet und mittels einer Wechselrichtereinrichtung der elektrischen Energiesenke zugeführt wird, wobei die Wechselrichtereinrichtung mit dem elektrischen Generator mittels einer zwei elektrische Leitungen aufweisenden Kabeleinheit elektrisch gekoppelt wird.

Gattungsgemäße Energieübertragungsvorrichtungen, Verfahren zu deren Betrieb sowie Windkraftanlagen mit solchen Energieübertragungsvorrichtungen sind dem Grunde nach bekannt, sodass es eines gesonderten druckschriftlichen Nachweises hierfür nicht bedarf. Gattungsgemäße Energieübertragungsvorrichtungen sowie Verfahren zu deren Betrieb werden üblicherweise im Bereich der elektrischen Energieerzeugung eingesetzt, und zwar um die von dem elektrischen Generator erzeugte Energie, die üblicherweise ein oder mehrere MW beträgt, an ein elektrisches Energieversorgungsnetz als Energiesenke anzukoppeln und einzuspeisen. Die Energieübertragungsvorrichtung dient also diesbezüglich vorzugsweise einer möglichst günstigen energietechnischen Ankopplung des elektrischen Generators an die elektrische Energiesenke.

Im Stand der Technik ist es bereits üblich, zu diesem Zweck einen Wechselspannungsgenerator für dreiphasigen Betrieb vorzusehen, der über eine Kabeleinheit eine vom elektrischen Generator erzeugte dreiphasige Wechselspannung einer Umrichtereinrichtung zuführt, die die zugeführte dreiphasige Wechselspannung in eine für die Energiesenke geeignete Spannung, die in der Regel ebenfalls eine dreiphasige Wechselspannung ist, umwandelt. Dabei erweist es sich als nachteilig, dass die Kabeleinheit für jede der Phasen eine eigene elektrische Leitung benötigt, die einen der zu übertragenden Leistung entsprechenden Kupferquerschnitt sowie eine der Bemessungsspannung entsprechenden elektrische Isolation erfordert.

Alternativ zu dem Vorgenannten besteht die Möglichkeit, im Bereich des elektrischen Generators eine Gleichrichteinrichtung vorzusehen, die aus der vom elektrischen Generator erzeugten Spannung eine Gleichspannung erzeugt, welche mittels der Kabeleinheit zu einer Wechselrichtereinheit übertragen wird, welche Wechselrichtereinheit die entsprechende Anpassung zur energietechnischen Kopplung der Energiesenke realisiert. Diese Ausgestaltung erlaubt es, lediglich mit zwei gegeneinander elektrisch isolierten Leitungen auszukommen und benötigt anstelle einer aufwendigen Umrichteinrichtung lediglich eine Gleichrichteinrichtung sowie eine deutlich weniger aufwendige Wechselrichtereinrichtung. Gleichwohl erfordert diese Ausgestaltung einen erhöhten Kupferquerschnitt bei elektrischen Leitungen der Kabeleinheit, sodass an dieser Stelle gegenüber der vorgenannten Ausgestaltung des Stands der Technik ein gewisser Nachteil entsteht.

Um den Aufwand der Kabeleinheit bei der ersten Realisierung reduzieren zu können, kann generatorseitig ergänzend ein Transformator vorgesehen sein, mittels dem die vom elektrischen Generator erzeugte elektrische Wechselspannung hochtransformiert wird. Dadurch würde jedoch der Niederspannungsbereich gemäß Normung überschritten, sodass die Kabeleinheit dann für Mittelspannung beziehungsweise Hochspannung auszulegen wäre. Dadurch würde der durch den geringeren Leitungsquerschnitt gewonnene Aufwand zumindest teilweise wieder verloren. Soll die Energieübertragungsvorrichtung bei einer Windkraftanlage zum Einsatz kommen, bei der in der Regel der elektrische Generator wäre ein solcher Transformator bei der Windkraftanlage demnach in der Gondel anzuordnen. Folglich würde ein solcher Transformator das Gewicht der Gondel deutlich vergrößern und dadurch Nachteile hinsichtlich der Konstruktion der Windkraftanlage sowie deren bestimmungsgemäßen Betrieb nach sich ziehen.

Es ist die Aufgabe der Erfindung, den Aufwand für das Übertragen der vom elektrischen Generator erzeugten elektrischen Energie zu der elektrischen Energiesenke zu reduzieren.

Diese Aufgabe wird durch eine Energieübertragungsvorrichtung mit den Merkmalen des Patentanspruchs 1 gelöst. Verfahrensseitig wird eine Lösung mittels des Weiteren unabhängigen Verfahrensanspruchs 12 erreicht. Schließlich wird die Aufgabe auch durch eine Windkraftanlage gemäß dem weiteren unabhängigen Anspruch 9 gelöst. Vorteilhafte Weiterbildungen der vorliegenden Erfindung sind Gegenstand der abhängigen Ansprüche.

Materialeinsparungen unter Beibehaltung der Funktionalität sind ein möglicher Weg, um Aufwand zu reduzieren. Bei einer Windkraftanlage ist eine Verkabelung im Turm ein wesentlicher Kosten- und Aufwandsaspekt. Bei aktuellen Turmhöhen von weit über 100 m und zu übertragenden Leistungen von mehreren MW ist der Einsatz von elektrischen Leitungen mit hohen Leiterquerschnitten erforderlich. Zudem erweist sich auch die Montage solcher Kabel nicht als unproblematisch. Die Erfindung schafft mit der erfindungsgemäßen Energieübertragungsvorrichtung hier eine Verbesserung. Dieser Sachverhalt ist jedoch nicht nur auf Windkraftanlagen beschränkt, sondern ebenso bei anderen Energieerzeugungsanlagen für elektrische Energie einsetzbar, beispielsweise in Kraftwerken oder dergleichen.

Dabei orientiert sich die Erfindung an der Normung, um den Aufwand für die elektrische Sicherheit überschaubar zu halten, und zwar indem die Energieübertragungsvorrichtung nach den Vorschriften gemäß DIN VDE 0100 sowie DIN VDE 0110 erstellt wird. Diese Normen betreffen die Errichtung und den Betrieb von Niederspannungsanlagen für eine Bemessungswechselspannung von 1000 V sowie eine Bemessungsgleichspannung von 1500 V. Soll beispielsweise eine Leistung von 3 MW vom elektrischen Generators zur elektrischen Energiesenke bei einer Gleichspannung von maximal 1500 V übertragen werden, so führt dies zu einem entsprechenden Stromfluss von 2000 A, wodurch sich ein entsprechend hoher Kupferquerschnitt bei den Leitungen der Kabeleinheit ergibt.

Die Erfindung sieht vorzugsweise vor, dass die Energieübertragungsvorrichtung als Niederspannungsanlage im Sinne der Normung, insbesondere der DIN VDE 0100 sowie der DIN VDE 0110 ausgebildet ist.

Die Erfindung basiert auf der Erkenntnis, dass bei einem Energieübertragungssystem, welches mit Gleichspannung arbeitet, der Isolationsaufwand reduziert werden kann, wenn die die Kabeleinheit beaufschlagende Spannung eine Gleichspannung ist, die symmetrisch zu einem Bezugspotential, beispielsweise einer Schaltungsmasse oder dergleichen ausgebildet ist. Dadurch ist eine elektrische Leitung der Kabeleinheit mit einer negativen Spannung gegenüber dem elektrischen Bezugspotential beaufschlagt, wohingegen die andere elektrische Leitung mit einer positiven elektrischen Spannung gegenüber dem elektrischen Bezugspotential beaufschlagt ist. Eine Isolation in Bezug auf die elektrische Sicherheit ist also nur für den Betrag der halben Spannung, mit der die Kabeleinheit insgesamt beaufschlagt ist, vorzusehen. So ergibt sich beispielsweise unter Berücksichtigung der vorgenannten Normung, dass bei Einhalten der Spannungsgrenze von 1500 V der Leiterspannung der elektrischen Leitungen der Kabeleinheit gegenüber dem elektrischen Bezugspotential insgesamt die doppelte Spannung, nämlich 3000 V für die elektrische Energieübertragung der Energieübertragungsvorrichtung zur Verfügung stehen kann. Bezogen auf das eingangs eingeführte Beispiel einer zu übertragenden Leistung von 3 MW ergibt sich hier eine Strombeanspruchung von 1000 A, was der Hälfte von der Strombeaufschlagung der Kabeleinheit im eingangs genannten Gleichspannungsfall entspricht. Dadurch kann der Leiterquerschnitt der elektrischen Leitungen der Kabeleinheit erheblich reduziert werden, sodass der Aufwand zur Erstellung der Energieübertragungsvorrichtung deutlich reduziert werden kann.

Der elektrische Generator ist vorzugsweise als rotierende elektrische Maschine ausgebildet und wird von einer die Leistung bereitstellenden Maschine, beispielsweise einer Verbrennungskraftmaschine, einem Windrad, einer Turbine, oder dergleichen drehend angetrieben. Es wird dem elektrischen Generator also eine mechanische Leistung zugeführt, die dieser in eine elektrische Leistung wandelt.

Eine rotierende elektrische Maschine ist eine Vorrichtung, die dem Grunde nach elektrische Energie in mechanische Energie, insbesondere Bewegungsenergie (Motorbetrieb) und/oder mechanische Energie in eine elektrische Energie (Generatorbetrieb) umformt. Bei der Bewegung handelt es sich in der Regel um eine Drehbewegung, die von einem Läufer der elektrischen Maschine ausgeführt wird. Ein Ständer der elektrischen Maschine ist im Unterschied zum Läufer fest angeordnet, das heißt, bei der Drehbewegung handelt es sich um eine Drehbewegung des Läufers gegenüber dem Ständer. In der Regel stellt der Ständer eine Öffnung bereit, in der der Läufer drehbar angeordnet ist.

Der Ständer und der Läufer sind mittels eines magnetischen Flusses verkettet, wodurch im Motorbetrieb die Kraftwirkung, nämlich das Drehmoment erzeugt wird, die den Läufer gegenüber dem Ständer drehend antreibt, und im Generatorbetrieb dem Läufer zugeführte Energie in Form einer Rotation in elektrische Energie umwandelt. Zu diesem Zweck weisen der Ständer und der Läufer jeweils wenigstens eine von einem elektrischen Strom durchflossene Wicklung auf. Im Ständer oder im Läufer kann die Wicklung auch durch einen Permanentmagneten gebildet oder ergänzt sein.

Rotierende elektrische Maschinen der gattungsgemäßen Art sind beispielsweise Drehfeldmaschinen, die für ein mehrphasiges, insbesondere dreiphasiges elektrisches Netz ausgebildet sind, wie beispielsweise Asynchronmaschinen, Synchronmaschinen, Synchronmaschinen mit Dämpferkäfig oder dergleichen.

Die elektrische Energiesenke ist beispielsweise ein Energieverteilungsnetz, insbesondere das öffentliche Energieverteilungsnetz oder dergleichen. Die Energiesenke kann aber auch einen Energiespeicher aufweisen beziehungsweise umfassen, indem die mittels der Energieübertragungsvorrichtung der Energiesenke zugeführte elektrische Energie gespeichert werden kann. Ein solcher Energiespeicher kann beispielsweise ein elektrochemischer Energiespeicher, ein Pumpspeicherkraftwerk, oder dergleichen sein.

Die Energieübertragungsvorrichtung der Erfindung weist eine Gleichrichteinrichtung auf, die an den elektrischen Generator angeschlossen ist und eine vom elektrischen Generator bereitgestellte Wechselspannung in eine Gleichspannung umwandelt. Zu diesem Zweck kann die Gleichrichteinrichtung Gleichrichtelemente aufweisen, die entsprechend verschaltet sind und mittels denen die gewünschte Gleichrichtfunktion erreicht werden kann. Zu diesem Zweck können die Gleichrichtelemente bedarfsweise zu einem oder mehreren Gleichrichteinheiten zusammengefasst sein.

Darüber hinaus weist die erfindungsgemäße Energieübertragungsvorrichtung eine Wechselrichtereinrichtung auf, die von der Gleichrichteinrichtung zugeführte Energie in eine für die elektrische Energiesenke geeignete Energieform umwandelt. Ist die elektrische Energiesenke das öffentliche Energieverteilungsnetz, erfolgt die Umwandlung der von der Gleichrichteinrichtung in Form einer Gleichspannung bereitgestellten Energie durch Umwandlung in eine Dreiphasen-Wechselspannung, die hinsichtlich der Spannungshöhe an das öffentliche Energieversorgungsnetz angepasst ist.

Die Wechselrichtereinrichtung ist eine Form eines elektrischen Energiewandlers, mittels dem elektrische Energie einer Gleichspannung in elektrische Energie einer Wechselspannung, insbesondere einer einphasigen oder auch einer mehrphasigen, vorzugsweise einer dreiphasigen Wechselspannung, gewandelt werden kann. Heutzutage werden Wechselrichter in Form sogenannter statischer Energiewandler eingesetzt, das heißt, dass diese anders - als dynamische Energiewandler - keine mechanisch bewegbaren, insbesondere rotierbaren Teile aufweisen. Wechselrichtereinrichtung der gattungsgemäßen Art als statische Energiewandler sind in der Regel als getaktete elektronische Energiewandler ausgebildet und weisen zu diesem Zweck ein Halbbrückenmodul mit zwei in Serie geschalteten Halbleiterschaltern auf, mittels welchen eine bereitgestellte elektrische Gleichspannung in eine elektrische Wechselspannung umgewandelt werden kann.

Die Energieübertragungsvorrichtung der Erfindung umfasst ferner eine Kabeleinheit mit zwei elektrischen Leitungen, die sowohl an die Gleichrichteinrichtung als auch an die Wechselrichtereinrichtung angeschlossen sind. Somit kann elektrische Energie von der Gleichrichteinrichtung an die Wechselrichtereinrichtung mittels der Kabeleinheit übertragen werden. Die Kabeleinheit weist zu diesem Zweck wenigstens zwei voneinander elektrisch isolierte Leitungen auf, die einen für einen Bemessungsstrom angepassten Leiterquerschnitt aufweisen. Ein wesentlicher Aspekt der Erfindung ist, dass die Gleichrichteinrichtung und/oder die Wechselrichtereinrichtung ausgebildet sind, die Kabeleinheit mit einer zu einem vorgegebenen elektrischen Bezugspotential symmetrierten elektrischen Spannung zu beaufschlagen. Ein elektrisches Bezugspotential im Sinne der Erfindung ist ein elektrisches Potential, welches im Bezug auf die Energieübertragungsvorrichtung eine Referenz ausbildet. Ein solches elektrisches Bezugspotential ist beispielsweise eine elektrische Masse, aber auch ein durch Aufbau oder Konstruktion bedingtes elektrisches Potential. Insbesondere kann das elektrische Bezugspotential auch durch ein Erdpotential gebildet sein.

Die Erfindung nutzt die Tatsache, dass bei einer in Bezug auf das elektrische Bezugspotential symmetrierten Spannungsbeaufschlagung der Kabeleinheit Anforderungen hinsichtlich der elektrischen Sicherheit reduziert werden können. Der Erfindung liegt nämlich die Erkenntnis zugrunde, dass die elektrische Sicherheit hinsichtlich eines Betrags der elektrischen Spannung zu spannungsführenden Teilen zu realisieren ist. In Bezug auf die Kabeleinheit kommt es in Bezug auf die elektrische Sicherheit somit nicht nur darauf an, dass zwischen den beiden Leitern der Kabeleinheit eine elektrische Spannung anliegt, sondern auch darauf, wie hoch die Spannung zwischen der jeweiligen einzelnen elektrischen Leitung und dem elektrischen Bezugspotential und berührbaren Teilen ist. Dadurch kann bei Symmetrierung gegenüber dem elektrischen Bezugspotential eine Reduzierung des Aufwands in Bezug auf die elektrische Sicherheit erreicht werden.

Die Symmetrierung kann mittels der Gleichrichteinrichtung oder auch, insbesondere auch ergänzend, mittels der Wechselrichtereinrichtung erreicht werden. Zu diesem Zweck kann die Gleichrichteinrichtung beziehungsweise die Wechselrichtereinrichtung einen Aufbau aufweisen, der einen Anschluss an das elektrische Bezugspotential bereitstellt und aufgrund einer Schaltungsstruktur und/oder einer Steuerung eine entsprechende Symmetrierung der die Kabeleinheit beaufschlagenden elektrischen Spannung bewirkt. Dadurch kann das Einhalten der Anforderungen gemäß der Normung erreicht werden, sodass ein vergleichsweise geringer Aufwand in Bezug auf die elektrische Sicherheit zu betreiben ist, im Vergleich zu Energieübertragungsvorrichtungen gemäß dem Stand der Technik.

Die Kabeleinheit kann dem Grunde nach zwei getrennte elektrische Leitungen aufweisen, die einzeln für sich genommen jeweils an der Gleichrichteinrichtung und der Wechselrichtereinrichtung angeschlossen sind. Natürlich kann jede der beiden elektrischen Leitungen auch durch eine Mehrzahl von Einzelleitungen gebildet sein, die elektrisch parallel zueinander angeschlossen sind. Darüber hinaus besteht natürlich die Möglichkeit, die Kabeleinheit als eine einstückige Baugruppe auszubilden, die die beiden elektrischen Leitungen umfasst. In diesem Fall ist natürlich zu beachten, dass die integrale Kabeleinheit eine hinreichende elektrische Isolation zwischen den beiden elektrischen Leitungen aufweist, sodass die zuverlässige elektrische Isolation gewährleistet werden kann. Dies gilt natürlich auch für den Fall, dass jede der beiden elektrischen Leitungen durch eine Mehrzahl von Einzelleitungen gebildet ist.

Gemäß einer Weiterbildung der Erfindung wird vorgeschlagen, dass der elektrische Generator wenigstens ein Wicklungspaar aufweist, wobei ein jede Wicklung des Wicklungspaars jeweils eine Gleichrichteinheit der Gleichrichteinrichtung angeschlossen ist, wobei die Gleichrichteinheiten miteinander kaskadiert verschaltet sind. Das Wicklungspaar umfasst also zwei voneinander getrennte Wicklungen, die insbesondere galvanisch voneinander getrennt sind und jeweils an eine eigene Gleichrichteinheit der Gleichrichteinrichtung angeschlossen sind. Die Gleichrichteinrichtung weist also eine entsprechende Anzahl von Gleichrichteinheiten auf. Jede der Gleichrichteinheiten ist somit an eine eigene Wicklung des Wicklungspaars angeschlossen. Ferner ist jede der Gleichrichteinheiten eingerichtet, eine von der jeweils angeschlossenen Wicklung bereitgestellte Wechselspannung gleichzurichten und eine entsprechende Gleichspannung bereitzustellen. Gleichrichtseitig sind die Gleichrichteinheiten jedoch kaskadiert miteinander verschaltet, sodass sich insgesamt eine Summenspannung einstellt, die der Summe der Einzelspannungen der Gleichrichteinheiten entspricht. Insbesondere bei elektrischen Generatoren, wie sie bei Windkraftanlagen zum Einsatz kommen, erweist sich diese Ausgestaltung als vorteilhaft, weil dort verwendete elektrische Generatoren zu meist über eine Mehrzahl von Wicklungspaaren verfügen aufgrund der konstruktiven Voraussetzungen für den bestimmungsgemäßen Betrieb einer Windkraftanlage. Um die hierbei erzeugte elektrische Energie möglichst optimal nutzen zu können, ist jede Wicklung an eine eigene Gleichrichteinheit angeschlossen. Bei einer Mehrzahl von Wicklungspaaren kann es deshalb auch vorgesehen sein, dass einige Wicklungen parallelgeschaltet sind. Darüber hinaus kann natürlich auch vorgesehen sein, dass die Gleichrichteinheiten so miteinander kaskadiert verschaltet sind, dass eine vorgesehene Bemessungsspannung erreicht wird. Zu diesem Zweck kann vorgesehen sein, dass einige Gleichrichteinheiten in Reihe geschaltet sind, wohingegen einige Gleichrichteinheiten auch parallelgeschaltet sein können. Insgesamt kann eine Matrixverschaltung der Gleichrichteinheiten vorgesehen sein, um eine bestimmungsgemäße die Kabeleinheit beaufschlagende elektrische Spannung zu erreichen. Die Symmetrierung der elektrischen Spannung der elektrischen beiden Leitungen der Kabeleinheit kann dadurch erreicht werden, dass die kaskadierten, insbesondere in Riehe geschalteten Gleichrichteinheiten gleichspannungsseitig mit dem gleichen elektrischen Strom beaufschlagt sind.

Besonders vorteilhaft erweist es sich, wenn die Gleichrichteinheiten derart verschaltet sind, dass sich die durch die Gleichrichteinheiten erzeugten Gleichrichtspannungen zu der elektrischen Spannung symmetrisch zu dem vorgegebenen elektrischen Bezugspotential addieren. Dies kann durch geeignete Verschaltung der Gleichrichteinheiten erreicht werden, beispielsweise indem ein mittlerer Verbindungspunkt der Gleichrichteinheiten an das elektrische Bezugspotential angeschlossen wird. Darüber hinaus kann natürlich auch vorgesehen sein, dass durch Steuerung der einzelnen Gleichrichteinheiten in ihrer Gleichrichtfunktion eine entsprechende Einstellung der elektrischen Spannung der Kabeleinheit erreicht werden kann. Zu diesem Zweck kann vorgesehen sein, dass die Gleichrichteinheiten steuerbare Gleichrichtelemente aufweisen, mittels denen die Gleichrichtfunktion in gewünschter Weise gesteuert werden kann. Die Gleichrichtelemente können zu diesem Zweck durch Halbleiterschalter wie Transistoren, Thyristoren oder dergleichen gebildet sein.

Eine Weiterbildung der Erfindung sieht vor, dass der elektrische Generator nach Art einer rotierenden elektrischen Maschine vorzugsweise als Synchrongenerator, insbesondere als elektrisch erregter oder permanenterregter Synchrongenerator ausgebildet ist. Durch den Einsatz einer rotierenden elektrischen Maschine kann eine besonders einfache Ankopplung an eine Zuführung mechanischer Energie erfolgen. Vorteilhaft erweist sich dies bei Einsatz in einer Windkraftanlage, bei der die Energie von einem Windrad rotatorisch zugeführt wird. Besonders vorteilhaft erweist es sich ferner, einen Synchrongenerator einzusetzen, insbesondere einen elektrisch erregten Synchrongenerator, mittels dem Leistungsschwankungen bei der Energiezuführung vorteilhaft abgefangen werden können. Gerade bei Windkraftanlagen kann hier auf häufige Leistungsschwankungen schnell und einfach reagiert werden.

Der erfindungsgemäße Aufbau der Gleichrichteinrichtung ermöglicht es, auch die Anforderungen hinsichtlich der elektrischen Sicherheit in Bezug auf die Gleichrichteinheiten entsprechend zu reduzieren. Dadurch kann auch hier Aufwand eingespart werden.

Gemäß einer weiteren Ausgestaltung wird vorgeschlagen, dass die Wechseleinrichtung zwei Wechselrichtereinheiten aufweist, die miteinander kaskadiert verschaltet an die Kabeleinheit angeschlossen sind. Natürlich können auch mehr als zwei Wechselrichtereinheiten für die Wechselrichtereinrichtung vorgesehen sein. Jede Wechselrichtereinheit ist für sich genommen ausgebildet, eine ihr zugeführte Gleichspannung in eine vorgegebene Wechselspannung zu wandeln. Dem Grunde nach gilt bezüglich der kaskadierten Schaltung ähnliches wie zuvor bereits zur Gleichrichteinrichtung und den kaskadiert verschalteten Gleichrichteinheiten ausgeführt. Auch hier kann der Aufwand reduziert werden, indem Wechselrichtereinheiten verwendet werden, die lediglich für eine reduzierte elektrische Sicherheit ausgelegt zu sein brauchen. Die Kaskadierung kann hier ebenfalls eine Reihenschaltung, aber auch eine Parallelschaltung sowie eine Kombination von einer Reihenschaltung mit einer Parallelschaltung, insbesondere eine Matrixschaltung umfassen. Die Symmetrierung der elektrischen Spannung der elektrischen beiden Leitungen der Kabeleinheit kann hier dadurch erreicht werden, dass die kaskadierten, insbesondere in Reihe geschalteten Wechselrichtereinheiten gleichspannungsseitig mit dem gleichen elektrischen Strom beaufschlagt sind.

Gemäß einer Weiterbildung wird vorgeschlagen, dass die Wechselrichtereinheiten derart verschaltet sind, dass sich die die Kabeleinheit beaufschlagende elektrische Spannung symmetrisch zu dem vorgegebenen Bezugspotential einstellt. Auch hier kann wieder vorgesehen sein, dass das elektrische Bezugspotential mit einem Verschaltungspunkt der kaskadierten Verschaltung der Wechselrichtereinheiten elektrisch gekoppelt ist. Darüber hinaus kann natürlich auch vorgesehen sein, dass durch geeignetes Steuern der Wechselrichtereinheiten die gewünschte Beaufschlagung der Kabeleinheit mit der elektrischen Spannung erreicht wird. Erreicht werden kann dies zum Beispiel, indem die kaskadierten Wechselrichtereinheiten gleichspannungsseitig mit dem gleichen elektrischen Strom beaufschlagt werden.

Gemäß einem weiteren Vorschlag der Erfindung weist die Energieübertragungsvorrichtung eine Steuereinheit auf, die eingerichtet ist, einen Betrag einer elektrischen Leitungsspannung zwischen wenigstens einer der beiden elektrischen Leitungen der Kabeleinheit und dem elektrischen Bezugspotential auf einen vorgegebenen Wert zu begrenzen. Zu diesem Zweck kann die Steuereinheit auf den elektrischen Generator, die Gleichrichteinrichtung und/oder die Wechselrichtereinrichtung einwirken. Durch geeignetes Steuern der Energieflüsse kann die Leitungsspannung in gewünschter Weise eingestellt werden. Vorzugsweise erfolgt das Einstellen der Leitungsspannung für beide elektrischen Leitungen der Kabeleinheit zugleich, sodass mit einer einzigen Steuereinheit die gewünschte Beaufschlagung der Kabeleinheit, insbesondere symmetrisch bezüglich des elektrischen Bezugspotentials erreicht werden kann. Vorzugsweise ist die Steuereinheit derart ausgebildet, dass sie den Betrag der elektrischen Leitungsspannung auf den durch die vorgenannte Normung vorgebebenen Wert begrenzt. Dadurch kann insgesamt der Aufwand für die Energieübertragungsvorrichtung bei gegebener Leistung reduziert werden.

Besonders vorteilhaft ist das elektrische Bezugspotential ein Erdpotential. Das Erdpotential ist in der Regel bei elektrischen Einrichtungen im Bereich der Energieversorgung dem Grunde nach vorhanden, sodass es zu dessen Nutzung keiner besonderen ergänzenden Maßnahme bedarf. Ist beispielsweise die Energieübertragungsvorrichtung Teil einer Windkraftanlage, und ein Turm der Windkraftanlage aus einem Stahlgerüst gefertigt, so kann das Stahlgerüst zugleich auch das elektrische Bezugspotential bereitstellen. Da gemäß der Erfindung das elektrische Bezugspotential bei bestimmungsgemäßem Betrieb nicht mit einem elektrischen Strom beziehungsweise im Wesentlichen nicht mit einem elektrischen Strom beaufschlagt wird, ist eine entsprechende zusätzliche Belastung bei der Nutzung des Erdpotentials nicht notwendigerweise zu berücksichtigen. Ist dagegen der Turm aus einer Betonkonstruktion gebildet, so kann beispielsweise eine Stahlarmierung oder dergleichen genutzt werden. Darüber hinaus besteht natürlich die Möglichkeit einen Blitzableiter in die Nutzung als elektrisches Bezugspotential zumindest teilweise einzubeziehen.

Darüber hinaus weist die Energieübertragungsvorrichtung gemäß einer Weiterbildung der Erfindung einen Gleichspannungsenergiewandler auf. Der Gleichspannungsenergiewandler ist eine elektrische Einrichtung die eine energietechnische Kopplung zwischen Gleichspannungsnetzen unterschiedlicher elektrischer Spannung herstellt. Der Gleichspannungsenergiewandler arbeitet entweder in einem Hochsetzbetrieb (Boost-Betrieb) oder in einem Tiefsetzbetrieb (Buck-Betrieb). Der Gleichspannungsenergiewandler kann Bestandteil der Kabeleinheit sein. Er kann beispielsweise an einer geeigneten Stelle im Turm der Windkraftanlage angeordnet sein. Darüber hinaus kann der Gleichspannungsenergiewandler auch Bestandteil der Gleichrichteinrichtung oder der Wechselrichtereinrichtung sein. Der Gleichspannungsenergiewandler beispielsweise bei einer Windkraftanlage vorzugsweise entsprechend in der Gondel oder im Fuß des Turms angeordnet sein. Mit dem Gleichspannungsenergiewandler kann insbesondere erreicht werden, dass eine Anpassung hinsichtlich der elektrischen Spannung realisiert werden kann, wenn die Gleichrichteinrichtung und die Wechselrichtereinrichtung für abweichende Gleichspannungen bemessen sind. Darüber hinaus kann auch erreicht werden, dass die Kabeleinheit mit der maximal möglichen elektrischen Spannung beaufschlagt werden kann, insbesondere wenn die Gleichrichteinrichtung diese elektrische Spannung nicht bereitstellen kann. Dadurch kann die Leistungsübertragung verbessert werden. Damit eine Symmetrie der die Kabeleinheit beaufschlagenden elektrischen Spannung auch durch den Gleichspannungsenergiewandler möglichst wenig oder nicht beeinflusst wird, kann der Gleichspannungsenergiewandler zwei Wandlereinheiten aufweisen, die jeweils bezogen auf das elektrische Bezugspotential eine Wandlung der elektrischen Spannung für eine der beiden elektrischen Leitungen der Kabeleinheit vorsehen. Für diesen Zweck kann der Gleichspannungsenergiewandler einen Anschluss für das elektrische Bezugspotential aufweisen.

Mit der Erfindung wird darüber hinaus eine Windkraftanlage der gattungsgemäßen Art vorgeschlagen, die eine Energieübertragungsvorrichtung der Erfindung aufweist. Dadurch lassen sich mit der Erfindung die mit der erfindungsgemäßen Energieübertragungsvorrichtung erreichbaren Vorteile auch im Wesentlichen mit der Windkraftanlage realisieren. Insbesondere kann der Aufwand im Bereich der Energieübertragungsvorrichtung reduziert werden, sodass die Montage vereinfacht und/oder die Kosten reduziert werden können. Durch die vereinfachte Montage können darüber hinaus auch Vorteile in Bezug auf die Zuverlässigkeit erreicht werden, beispielsweise weil Montagetechniken beziehungsweise Verbindungstechniken im Bereich der elektrischen Anschlüsse einfacher und zuverlässiger ausgebildet sein können.

Gemäß einer vorteilhaften Ausgestaltung wird vorgeschlagen, dass die Gleichrichteinrichtung in der Gondel und die Wechselrichtereinrichtung in einem Fuß des Turms der Windkraftanlage angeordnet sind. Dies erlaubt es, die physikalische Masse der Gondel zu reduzieren, sodass insgesamt die Windkraftanlage einer höheren Beanspruchung ausgesetzt werden kann. Darüber hinaus erlaubt es diese Ausgestaltung, dass die Wechselrichtereinrichtung im Fuß auf einfache Weise auch während des bestimmungsgemäßen Betriebs der Windkraftanlage zugänglich ist. Schließlich können Wartungsmaßnahmen im Bereich der Wechselrichtereinrichtung auf einfache Weise aufgrund deren Anordnung im Fuß durchgeführt werden. Somit kann auch der Betrieb der Windkraftanlage hinsichtlich des Aufwands verbessert werden.

Gemäß einem weiteren Aspekt wird bei einem gattungsgemäßen Verfahren vorgeschlagen, dass die Kabeleinheit mittels der Gleichrichteinrichtung und/oder der Wechselrichtereinrichtung mit einer zu einem vorgegeben elektrischen Bezugspotential symmetrierten elektrischen Spannung beaufschlagt wird. Die erfindungsgemäße Verfahrensführung erlaubt es also, die Spannungsbeanspruchung der Kabeleinheit in Bezug auf die elektrische Sicherheit zu reduzieren. Damit können die mit der Energieübertragungsvorrichtung der Erfindung verbundenen Vorteile bei der vorgesehenen Verfahrensführung erreicht werden.

Gemäß einer Weiterbildung wird verfahrensseitig ferner vorgeschlagen, dass die elektrische Spannung in Bezug auf das elektrische Bezugspotential und/oder die zu übertragende Leistung geregelt wird. Dadurch ist es möglich, die Betriebsbedingungen auch unter variierenden Belastungszuständen, insbesondere bei Betrieb einer Windkraftanlage zuverlässig einhalten zu können. Die Regelung kann beispielsweise durch eine Steuereinheit realisiert sein, die entsprechend eingerichtet ist. Mittels der Steuereinheit kann zugleich auch vorgesehen sein, dass ein Betrag einer elektrischen Leitungsspannung zwischen wenigstens einer der beiden elektrischen Leitungen der Kabeleinheit und dem elektrischen Bezugspotential auf einen vorgegebenen Wert begrenzt wird.

Weitere Vorteile und Merkmale ergeben sich aus der folgenden Beschreibung von Ausführungsbeispielen. Die anhand der Figuren erläuterten Ausführungsbeispiele dienen lediglich der Erläuterung der Erfindung und sollen diese nicht beschränken. In den Figuren bezeichnen gleiche Bezugszeichen gleiche Bauteile und Funktionen.

Es zeigen:
- FIG 1: in schematischer Ansicht eine Energieübertragungsvorrichtung des Stands der Technik mit einer Kabeleinheit für einen dreiphasigen Wechselspannungsanschluss eines elektrischen Generators an eine Umrichtereinrichtung,
- FIG 2: in schematischer Ansicht eine alternative Realisierung einer Energieübertragungsvorrichtung gemäß dem Stand der Technik mit einer Gleichrichteinrichtung, die über eine Kabeleinheit an eine Wechselrichtereinheit eingeschlossen ist,
- FIG 3: in schematischer Ansicht eine Energieübertragungsvorrichtung gemäß der Erfindung,
- FIG 4: in schematisch perspektivischer Seitenansicht eine Windkraftanlage mit einer Energieübertragungsvorrichtung gemäß der Erfindung und
- FIG 5: in schematisch perspektivischer Seitenansicht eine Windkraftanlage mit einer Energieübertragungsvorrichtung wie in FIG 3, jedoch mit einem Gleichspannungsenergiewandler.

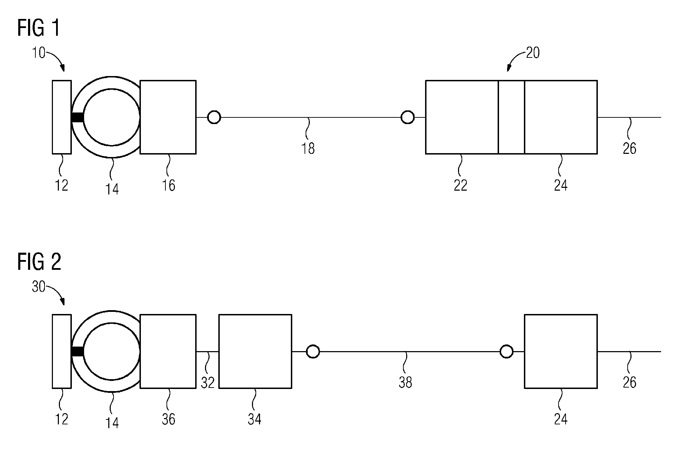

FIG 1 zeigt schematisch eine Energieübertragungsvorrichtung 10 gemäß dem Stand der Technik für den Einsatz bei einer Windkraftanlage. Die Energieübertragungsvorrichtung 10 weist demzufolge einen Flansch 12 auf, der an einem Getriebe 14 gefestigt ist. Das Getriebe 14 ist ferner mit einem nicht weiter spezifizierten Dreiphasenwechselspannungsgenerator 16 verbunden. Diese Elemente sind in einer nicht dargestellten Gondel einer Windkraftanlage angeordnet. Über eine Kabeleinheit 18 ist der Dreiphasenwechselspannungsgenerator 16 an eine in einem Fuß eines Turms der Windkraftanlage angeordnete Umrichtereinrichtung 20 angeschlossen. Die Umrichtereinrichtung 20 ihrerseits ist an ein öffentliches Energieversorgungsnetz 26 angeschlossen.

Die Umrichtereinrichtung 20 weist zwei Umrichterkomponenten 22, 24 auf, die eine entsprechende Umwandlung der über die Kabeleinheit 18 zugeführten dreiphasigen elektrischen Wechselspannung in eine Wechselspannung für das öffentliche Energieversorgungsnetz 26 umwandeln. Das öffentliche Energieversorgungsnetz 26 ist vorliegend ebenfalls ein dreiphasiges Wechselspannungsnetz.

FIG 2 zeigt schematisch eine alternative Realisierung für eine Energieübertragungsvorrichtung 30 für eine Windkraftanlage gemäß dem Stand der Technik. Im Folgenden soll lediglich auf die zu FIG 1 unterschiedlichen Anlagenteile eingegangen werden.

Auch die Energieübertragungsvorrichtung 30 gemäß FIG 2 weist einen nicht näher spezifizierten Wechselspannungsgenerator 36 auf, der über eine erste elektrische Leitung 32 an eine Gleichrichteinrichtung 34 angeschlossen ist. Diese Elemente zusammen mit dem Flansch 12 und dem Getriebe 14 sind ebenfalls wiederum in der Gondel der nicht weiter spezifizierten Windkraftanlage angeordnet. Im Fuß des Turms der Windkraftanlage ist bei dieser Ausgestaltung eine Wechselrichtereinrichtung 24 angeordnet, die über eine Kabeleinheit 38 an die Gleichrichteinrichtung 34 angeschlossen ist. Ferner ist die Wechselrichtereinrichtung 24 an das öffentliche Energieversorgungsnetz 26, wie zuvor zur FIG 1 erläutert, angeschlossen.

Die Kabeleinheiten 18, 38 gemäß der Ausgestaltungen zu den FIG 1 und 2 sind jeweils im Turm der nicht weiter dargestellten Windkraftanlage angeordnet. Beide Ausgestaltungen gemäß der FIG 1 und 2 weisen spezifische Nachteile auf. So ist bei der Ausgestaltung gemäß FIG 1 ein aufwändiges Kabel für einen dreiphasigen Anschluss des Generators 16 an die Umrichtereinheit 20 erforderlich. Bei der Ausgestaltung gemäß FIG 2 kann zwar auf eine Zweileitungskabeleinheit, nämlich die Kabeleinheit 38, zurückgegriffen werden, jedoch sind entsprechend größere Leiterquerschnitte der Leitungen der Kabeleinheit 38 gegenüber der Kabeleinheit 18 vorzusehen. Gleichwohl tritt bei beiden Ausgestaltungen gemäß der FIG 1 und 2 das Problem von aufwändigen Kabeleinheiten mit großen Leiterquerschnitten auf, insbesondere wenn die Energieübertragungsvorrichtungen 10, 30 für den Einsatz bei Niederspannung im Sinne der Normung ausgelegt sind. Beispielsweise kann eine Energieversorgungseinrichtung 10 gemäß FIG 1 für eine elektrische Spannung von 690 V effektiv ausgelegt sein. Bei einer Energieübertragungseinrichtung 30 gemäß FIG 2 kann beispielsweise eine elektrische Spannung von 1000 V vorgesehen sein.

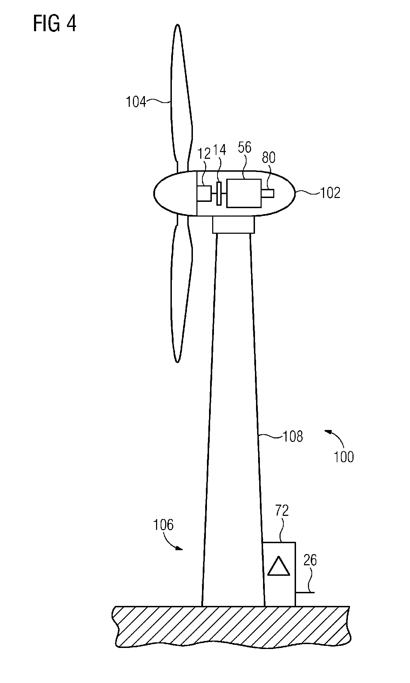

Die folgenden Ausführungen beziehen sich auf die Erfindung. In FIG 4 ist eine Windkraftanlage 100 mit einer an einem Turm 108 horizontal drehbar gelagerten Gondel 102 und mit einem an der Gondel 102 drehbar gelagerten Windrad 104. Ferner ist in der Gondel 102 ein mit dem Windrad 104 mechanisch gekoppelter elektrischer Generator 56 nach Art einer rotierenden elektrischen Maschine angeordnet.

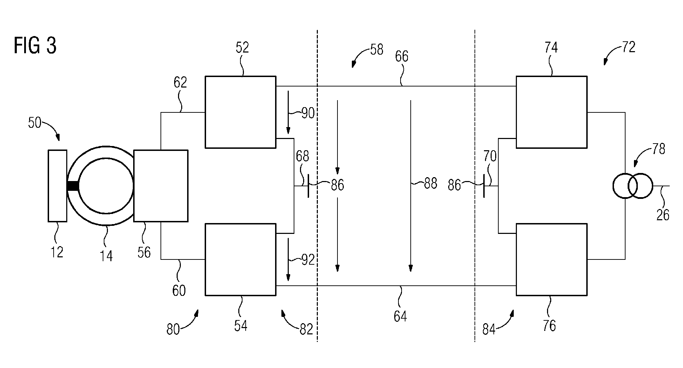

FIG 3 zeigt nun eine erfindungsgemäße Energieübertragungsvorrichtung 50 zum Übertragen von mittels eines elektrischen Generators 56 erzeugter elektrischer Energie zu einer elektrischen Energiesenke 26, hier das öffentliche Energieversorgungsnetz, so wie sie in der Windkraftanlage 100 gemäß FIG 4 eingesetzt ist.

Die Energieübertragungsvorrichtung 50 weist eine an den elektrischen Generator 56 angeschlossene Gleichrichteinrichtung 80, eine an die elektrische Energiesenke angeschlossene Wechselrichtereinrichtung 72 sowie eine mit einem ersten Ende 82 an die Gleichrichteinrichtung 80 und mit einem zweiten Ende 84 an die Wechselrichtereinrichtung 72 angeschlossene Kabeleinheit 58 zum elektrischen Koppeln der Gleichrichteinrichtung 80 mit der Wechselrichtereinrichtung 72 auf. Zu diesem Zweck weist die Kabeleinheit 58 zwei elektrische Leitungen 64, 66 auf, um die von der Gleichrichteinrichtung 80 bereitgestellte elektrische Spannung 88, die eine Gleichspannung ist, zur Wechselrichtereinrichtung 72 zu führen.

Vorliegend ist, wie auch in den FIG 1 und 2 bereits dargestellt, ein Flansch 12 vorgesehen, an dem das Windrad 104 angeflanscht ist. Der Flansch 12 ist wiederum mit einer Eingangswelle eines Getriebes 14 verbunden, welches vorliegend als zweistufiges Planetengetriebe, insbesondere als Hybrid Drive System, angeschlossen ist. Der elektrische Generator 56 ist seinerseits mit einer nicht dargestellten Eingangswelle an eine Ausgangswelle des Getriebes 14 angeschlossen. Auf diese Weise wird die vom Windrad 104 bereitgestellte Rotationsenergie dem elektrischen Generator 56 zugeführt.

Der elektrische Generator 56 ist vorliegend als elektrisch erregter Synchrongenerator ausgebildet und weist in dieser Ausgestaltung ein Wicklungspaar auf. In alternativen Ausgestaltungen kann vorgesehen sein, dass der elektrische Generator 56 eine Mehrzahl von Wicklungspaaren aufweist.

Die Wicklungen des Wicklungspaars sind vorliegend galvanisch getrennt voneinander und über separate Leitungen 60, 62 an Gleichrichteinheiten 52, 54 der Gleichrichteinrichtung 80 angeschlossen. Die Gleichrichteinheiten 52, 54 sind vorliegend durch Diodengleichrichter in Brückenschaltung gebildet. Auf diese Weise stellt die Gleichrichteinheit 52 eine erste Gleichspannung 90 und die Gleichrichteinheit 54 eine zweite Gleichspannung 92 bereit. Innerhalb der Gleichrichteinrichtung 80 sind die Gleichrichteinheiten 52, 54 miteinander kaskadiert verschaltet, sodass die elektrische Spannung 88 durch Addition der ersten und der zweiten Gleichspannung 90, 92 gebildet wird. Zu diesem Zweck sind die beiden Gleichrichteinheiten 52, 54 an einer Verknüpfungsstelle 68 elektrisch miteinander gekoppelt. Der Verbindungspunkt 68 ist ferner an ein elektrisches Bezugspotential 86, hier das Erdpotential angeschlossen. Das Erdpotential 86 wird vorliegend über die Turmkonstruktion des Turms 108, und zwar eine Amierung des Turms, bereitgestellt.

An den Gleichrichteinheiten 52, 54 wird zum Abgreifen der Summenspannung der Gleichrichteinheiten 52, 54 als elektrische Spannung der Gleichrichteinrichtung 80 eine Kabeleinheit 58 mit zwei Leitungen 64, 66 mit einem ersten Ende 82 angeschlossen. Die Kabeleinheit 58 stellt eine elektrische Verbindung zwischen der Gleichrichteinrichtung 80 und einer in Turmfuß 106 angeordneten Wechselrichtereinrichtung 72 her. Zu diesem Zweck ist ein zweites Ende der Kabeleinheit 58 an die Wechselrichtereinrichtung 72 angeschlossen.

Die Wechselrichtereinrichtung 72 weist in Analogie zur Gleichrichteinrichtung 80 zwei Wechselrichtereinheiten 74, 76 auf, die vorliegend ebenfalls kaskadiert miteinander verschaltet sind. Die Wechselrichtereinheiten 74, 76 sind zu diesem Zweck an einem Verknüpfungspunkt 70 elektrisch miteinander gekoppelt, wobei der Verbindungspunkt zugleich auch an das Erdpotential 86 angeschlossen ist. Die Wechselrichtereinheiten 74, 76 erzeugen aus der zugeführten elektrischen Leistung eine dreiphasige Wechselspannung, die einem Transformator 78 über nicht näher bezeichnete Leitungen zugeführt wird. Der Transformator 78 seinerseits ist an das öffentliche Energieversorgungsnetz 26 angeschlossen, sodass die von den Wechselrichtereinheiten 74, 76 bereitgestellten Leistungen in das Energieversorgungsnetz 26 eingespeist werden können.

Aus der FIG 3 ist ersichtlich, dass ein Stromfluss im Wesentlichen nicht über das Erdpotential 86 erfolgt. Vielmehr schließt sich der Stromkreis über die jeweiligen Verbindungspunkte 68, 70 der Gleichrichteinrichtung 80 sowie der Wechselrichtereinrichtung 72.

Die Gleichrichteinrichtung 80 sowie die Wechselrichtereinrichtung 72 werden derart gesteuert, dass die elektrische Spannung 88 der Kabeleinheit 58 symmetrisch zum Bezugspotential 86 sich einstellt. Zu diesem Zweck sind die Gleichrichteinheiten 52, 54 gleichspannungsseitig vom gleichen elektrischen Strom durchströmt. Entsprechendes gilt für die Wechselrichtereinheiten 74, 76. Dadurch kann erreicht werden, dass Aufwand bezüglich der elektrischen Sicherheit eingespart werden kann, weil die Gleichrichteinheiten 52, 54 sowie die Wechselrichtereinheiten 74, 76 im bestimmmungsgemäßen Betrieb lediglich mit der halben Betriebsspannung beaufschlagt werden. Zugleich kann aber eine entsprechend hohe Nutzspannung für die Energieübertragung bereitgestellt werden. Hierdurch ergeben sich Vorteile hinsichtlich der Reduzierung einer Strombeaufschlagung der Kabeleinheit 58 unter Berücksichtigung der Anforderungen der elektrischen Sicherheit, sodass Leiterquerschnitte der elektrischen Leitungen 64, 68 entsprechend gegenüber dem Stand der Technik reduziert sein können.

Besonders vorteilhaft erweist es sich, wenn - wie in diesem Ausführungsbeispiel - die erste und die zweite elektrische Spannung 90, 92, die durch die Gleichrichteinheiten 52, 54 bereitgestellt werden, kleiner als 1500 V sind, sodass für die Frage der elektrischen Sicherheit die Normung gemäß DIN VDE 0 100 beziehungsweise DIN VDE 0 110 angewendet werden kann. Dadurch ergeben sich gegenüber höheren Spannungen deutliche Vorteile hinsichtlich des erforderlichen Aufwands für die elektrische Sicherheit.

Obwohl das Ausführungsbeispiel gemäß der FIG 3 und 4 zur Erfindung vorsieht, dass sowohl die Gleichrichteinrichtung 80 als auch die Wechselrichtereinrichtung 72 jeweils einen Anschluss an das elektrische Bezugspotential beziehungsweise Erdpotential 86 vorsieht, kann bei alternativen Ausgestaltungen auch vorgesehen sein, dass lediglich ein Anschluss an das elektrische Bezugspotential 86 entweder im Bereich der Gleichrichteinrichtung 80 oder im Bereich der Wechselrichtereinrichtung 72 vorgesehen ist. Durch entsprechende Steuerung kann dann ebenfalls eine symmetrische Spannungsbeaufschlagung der Kabeleinheit 58 gegenüber dem elektrischen Bezugspotential beziehungsweise Erdpotential 86 erreicht werden.

Vorteilhaft erweist es sich, wenn der Strom in den beiden Gleichrichteinheiten 52, 54 im Wesentlichen gleich groß ist. Das gleiche gilt dem Grunde nach auch für die Wechselrichtereinheiten 74, 76. Mit einer entsprechenden Steuerung kann dieser Zustand erreicht werden.

Dadurch erreicht die Erfindung ferner, dass auch die Gleichrichteinheiten 52, 54 sowie die Wechselrichtereinheiten 74, 76 lediglich die geringeren Anforderungen hinsichtlich der elektrischen Sicherheit einzuhalten brauchen.

Aufgrund der vorgenannten Ausgestaltung ergibt sich ein Stromfluss durch das Erdpotential 86 zu Null.

Obwohl also die Anforderungen hinsichtlich der elektrischen Sicherheit mit der Erfindung eingehalten werden, kann trotzdem hinsichtlich der übertragenden Leistung ein Bonuseffekt erreicht werden, nämlich eine Spannung im Falle von Niederspannungsanlagen von 3000 V, obwohl es sich um eine Niederspannungsanlage handelt.

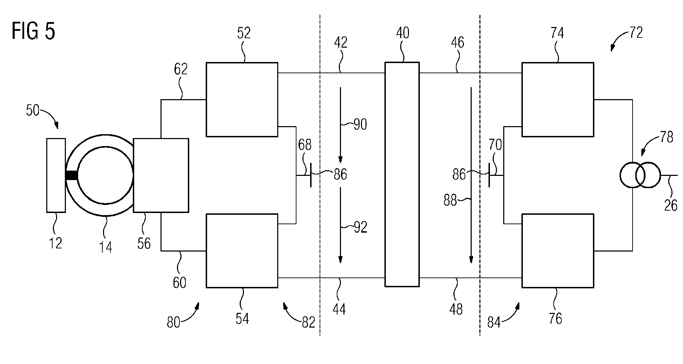

FIG 5 zeigt eine weitere Ausgestaltung einer Energieübertragungsvorrichtung gemäß der Erfindung basierend auf der Ausgestaltung gemäß FIG 3. Im Folgenden werden daher lediglich die unterscheidenden Merkmale gegenüber der Ausgestaltung nach FIG 3 erläutert. Die weiteren Merkmale und Funktionen entsprechen dem Ausführungsbeispiel nach FIG 3.

Im Unterschied zum Ausführungsbeispiel nach FIG 3 weist die Kabeleinheit 38 einen Gleichspannungsenergiewandler 40 auf, der in die Leitungen 64, 66 der FIG 3 eingeschleift ist. Somit ist die Gleichrichteinrichtung 80 über zwei elektrische Leitungen 42, 44 an den Gleichspannungsenergiewandler 40 angeschlossen. Der Gleichspannungsenergiewandler 40 ist seinerseits über zwei elektrische Leitungen 46, 48 an die Wechselrichtereinrichtung 72 angeschlossen. Mittels des Gleichspannungsenergiewandlers 40 wird eine Gleichspannungsanpassung zwischen der Gleichrichteinrichtung 80 und der Wechselrichtereinrichtung 72 erreicht. Vorliegend ist der Gleichspannungsenergiewandler 40 an einer geeigneten Stelle im Turm 108 der Windkraftanlage 100 angeordnet. Der Gleichspannungsenergiewandler 40 ist derart eingerichtet, dass elektrische Spannungen der elektrischen Leitungen 42, 44 gegenüber dem Erdpotential 86 den gleichen Betrag aufweisen. Das Gleiche gilt auch für die elektrischen Spannungen der elektrischen Leitungen 46, 48 gegenüber dem Erdpotential 86. Die symmetrische Spannungsbeaufschlagung gegenüber dem Erdpotential 86 bleibt somit im Wesentlichen erhalten.

Bei alternativen Ausführungsbeispielen kann der Gleichspannungsenergiewandler 40 auch in der Gondel 102, insbesondere einstückig mit der Gleichrichteinrichtung 80, oder auch im Fuß 106 des Turms 108, insbesondere einstückig mit der Wechselrichtereinrichtung 72, angeordnet sein.

Das Prinzip der Erfindung wurde zwar anhand einer Windkraftanlage erläutert, kann jedoch auch in anderen energietechnischen Anlagen zweckmäßig zum Einsatz kommen.

Die vorangehend diskutierten Ausführungsbeispiele dienen lediglich der Erläuterung der Erfindung und sind für diese nicht beschränkend. Insbesondere können natürlich Merkmale und Ausgestaltungen in beliebiger Weise miteinander kombiniert werden, um zu weiteren bedarfsgerechten Ausgestaltungen zu gelangen, ohne den Gedanken der Erfindung zu verlassen. Darüber hinaus können natürlich Vorrichtungsmerkmale als Verfahrensmerkmale auftreten beziehungsweise umgekehrt.

## Patentansprüche

1. Energieübertragungsvorrichtung (50) zum Übertragen von mittels eines elektrischen Generators (56) erzeugter elektrischer Energie zu einer elektrischen Energiesenke (26), mit einer an den elektrischen Generator (56) angeschlossenen Gleichrichteinrichtung (80), einer an die elektrische Energiesenke (26) angeschlossenen Wechselrichtereinrichtung (72) sowie einer mit einem ersten Ende (82) an die Gleichrichteinrichtung (80) und mit einem zweiten Ende (84) an die Wechselrichtereinrichtung (72) angeschlossenen Kabeleinheit (58) zum elektrischen Koppeln der Gleichrichteinrichtung (80) mit der Wechselrichtereinrichtung (72), welche Kabeleinheit (58) zwei elektrische Leitungen (64, 66) aufweist,
**dadurch gekennzeichnet, dass** die Gleichrichteinrichtung (80) und/oder die Wechselrichtereinrichtung (72) ausgebildet sind, die beiden elektrischen Leitungen (64, 66) der Kabeleinheit (58) mit einer zu einem vorgegebenen elektrischen Bezugspotential (86) symmetrierten elektrischen Spannung (88) zu beaufschlagen.

2. Energieübertragungsvorrichtung nach Anspruch 1,
**dadurch gekennzeichnet, dass** der elektrische Generator (56) wenigstens ein Wicklungspaar aufweist, wobei an jede Wicklung des Wicklungspaars jeweils eine Gleichrichteinheit (52, 54) der Gleichrichteinrichtung (80) angeschlossen ist, wobei die Gleichrichteinheiten (52, 54) miteinander kaskadiert verschaltet sind.

3. Energieübertragungsvorrichtung nach Anspruch 2,
**dadurch gekennzeichnet, dass** die Gleichrichteinheiten (52, 54) derart verschaltet sind, dass sich die durch die Gleichrichteinheiten (52, 54) erzeugten Gleichrichtspannungen (90, 92) zu der elektrischen Spannung (88) symmetrisch zu dem vorgegebenen elektrischen Bezugspotential (86) addieren.

4. Energieübertragungsvorrichtung nach einem der Ansprüche 1 bis 3,
**dadurch gekennzeichnet, dass** der elektrische Generator (56) nach Art einer rotierenden elektrischen Maschine, vorzugsweise als Synchrongenerator, insbesondere als elektrisch erregter oder permanenterregter Synchrongenerator, ausgebildet ist.

5. Energieübertragungsvorrichtung nach einem der Ansprüche 1 bis 4,
**dadurch gekennzeichnet, dass** die Wechselrichtereinrichtung (72) zwei Wechselrichtereinheiten (74, 76) aufweist, die miteinander kaskadiert verschaltet an die Kabeleinheit (58) angeschlossen sind.

6. Energieübertragungsvorrichtung nach Anspruch 5,
**dadurch gekennzeichnet, dass** die Wechselrichtereinheiten (74, 76) derart verschaltet sind, dass sich die die Kabeleinheit (58) beaufschlagende elektrische Spannung (88) symmetrisch zu dem vorgegebenen elektrischen Bezugspotential (86) einstellt.

7. Energieübertragungsvorrichtung nach einem der Ansprüche 1 bis 6,
**gekennzeichnet durch** eine Steuereinheit, die eingerichtet ist, einen Betrag einer elektrischen Leitungsspannung (90, 92) zwischen wenigstens einer der beiden elektrischen Leitungen (64, 66) der Kabeleinheit (58) und dem elektrischen Bezugspotential (86) auf einen vorgegebenen Wert zu begrenzen.

8. Energieübertragungsvorrichtung nach Anspruch 7,
**dadurch gekennzeichnet, dass** das elektrische Bezugspotential (86) ein Erdpotential ist.

9. Windkraftanlage (100) mit einer an einem Turm (108) horizontal drehbar gelagerten Gondel (102) und mit einem an der Gondel (102) drehbar gelagerten Windrad (104) und einem in der Gondel (102) angeordneten, mit dem Windrad (104) mechanisch gekoppelten elektrischen Generator (56) nach Art einer rotierenden elektrischen Maschine,
**gekennzeichnet durch** eine Energieübertragungsvorrichtung (50) nach einem der vorhergehenden Ansprüche.

10. Windkraftanlage nach Anspruch 9,
**dadurch gekennzeichnet, dass** die Gleichrichteinrichtung (80) in der Gondel (102) und die Wechselrichtereinrichtung (72) in einem Fuß (106) des Turms (108) der Windkraftanlage (100) angeordnet sind.

11. Verfahren zum Übertragen von mittels eines elektrischen Generators (56) erzeugter elektrischer Energie zu einer elektrischen Energiesenke (26), wobei die vom elektrischen Generator (56) erzeugte elektrische Energie mittels einer Gleichrichteinrichtung (80) gleichgerichtet und mittels einer Wechselrichtereinrichtung (72) der elektrischen Energiesenke (26) zugeführt wird, wobei die Wechselrichtereinrichtung(72) mit der Gleichrichteinrichtung (80) mittels einer zwei elektrische Leitungen (64, 66) aufweisenden Kabeleinheit (58) elektrisch gekoppelt wird,
**dadurch gekennzeichnet, dass** die beiden elektrischen Leitungen (64, 66) der Kabeleinheit (58) mittels der Gleichrichteinrichtung (80) und/oder der Wechselrichtereinrichtung (72) mit einer zu einem vorgegebenen elektrischen Bezugspotential (86) symmetrierten elektrischen Spannung (88) beaufschlagt wird.

12. Verfahren nach Anspruch 11,
**dadurch gekennzeichnet, dass** die elektrische Spannung (88) in Bezug auf das elektrische Bezugspotential (86) und/oder die zu übertragende Leistung geregelt wird.
